# EUROPEAN PATENT SPECIFICATION

(11) **EP 2 021 140 B1**
(45) Date of publication and mention of the grant of the patent: **08.08.2012**
(21) Application number: 07759233.5
(22) Date of filing: 23.03.2007
(51) Int. Cl.: B22F 3/00, B23K 20/12

(54) **POWDER METAL FRICTION STIR WELDING TOOL AND METHOD OF MANUFACTURE THEREOF**
PULVERMETALL-REIBRÜHRSCHWEISSWERKZEUG UND HERSTELLUNGSVERFAHREN DAFÜR
OUTIL DE SOUDAGE PAR AGITATION ET FRICTION EN MÉTAL EN POUDRE ET PROCÉDÉ DE MANUFACTURE ASSOCIÉ

(30) Priority: 23.05.2006 US 802753 P; 21.03.2007 US 689186
(43) Date of publication of application: 11.02.2009
(73) Proprietor: Federal-Mogul Corporation, Southfield, MI 48034 (US)
(72) Inventor: CHRISTOPHERSON, Denis., Jr., Waupun, WI 53963 (US)
(74) Representative: Harrison Goddard Foote
(86) International application number: PCT/US2007/064772
(87) International publication number: WO 2007/140043

(56) References cited:
- WO-A2-2007/109719
- US-A1- 2004 238 599
- US-A1- 2005 249 978
- US-B2- 6 648 206

## Description

This invention relates generally to friction stir welding tools, and more particularly to the materials used to make such tools.

Friction stir welding is a technique whereby the tip of a rotating friction stir tool is first plunged into an unwelded joint of two abutting metal members to be joined, after which the rotating tool is traversed along the joint causing the materials of the two members to be heated sufficiently to reach a plastic state causing displacement or stirring of the plastic materials across the joint interface which, upon cooling, results in a metallurgical weld of the two materials. The technique can also be used to join stacked metal members whereby the rotating tool is plunged through one of the members and part way into the other and then moved along to weld them together.

Friction stir weld tools are typically wrought and then machined to the desired shape. For example, the tools can be cast from a desired metal alloy and then subjected to machining to impart the desired shape and features to the friction stir tool. The manufacturing and finishing processes can limit the selection of materials available for use as friction stir tooling and further add to the cost and complexity of forming such tooling.

Friction stir welding tools fabricated of powder material or having at least a welding tip fabricated of powder material are disclosed in US 2004/238599, US 2005/249978 and US 6,648,206.

The present invention provides a friction stir welding tool as specified in claim 1. Specifically the powder metal material is iron-based and the active surfaces or a portion of the active surfaces of the friction stir tool contain Fe₃O₄ from oxides to enhance its wear and/or friction characteristics. This is suitably achieved by steam treating the surfaces to induce the formation of Fe₃O₄, which is a stable form of iron oxide and imparts high wear and enhanced friction characteristics to the working surfaces or portion of the surfaces as desired of the powder metal friction stir tool.

The invention further contemplates the use of high wear, high friction composite materials, such as cements and the like to achieve a long lasting but highly effective friction stir tool.

The invention further contemplates the use of additives to the powder metal mix prior to heating to enhance the manufacturing efficiencies and improve the resulting strength and other properties of the friction wear tool.

The invention further contemplates the use of a heat treating process near ambient pressure.

According to a further particular feature of the invention, it is contemplated that the powder metallurgy process will enable the formation of a gradient structure in either materials and/or properties of the friction stir tool to take advantage of cost and performance benefits that can arise from such a gradient structure. For example, the leading tip or plunger portion of the friction stir tool can be fabricated of a very hard and perhaps more costly powder metal composition, whereas the friction shoulder surfaces of the friction stir tool can be fabricated of a different material which is also wear resistant but may have enhanced friction inducing characteristics to maximize the heating and stirring affect of the tool. Other possibilities include forming the shank of the friction stir tool of one material (perhaps a lower cost material suitable for chucking the tool) while the remaining operating free end of the friction stir tool is made ofa different material, either together or separately from one another and thereafter joined together. Still a further example can include forming the core or center of the friction stir tool of one powder metal composition while the outer portion or sheath of the friction stir tool is made of another material. It will be appreciated that the combinations of materials and their relative arrangements are too numerous to list and that the intent of this development of the present invention is to capture and contemplate the broad concept of using powder metallurgy to achieve a gradient structure in a friction stir tool.

According to another aspect, the invention provides a method as specified in claim 13 of manufacturing a friction stir welding tool having the features specified in claim 1. The method includes compacting a powder mixture and sintering the powder mixture at about ambient pressure which is not under vacuum. The powder mixture may be sintered in a continuous-style furnace

Yet another aspect of the invention provides a method manufacturing a friction stir welding tool having the features specified in claim 1, which method includes compacting at least two separate portions of the tool separately from one another and joining them to one another. This method may include sintering adjacent ones of the separate portions to one another.

### BRIEF DESCRIPTION OF THE DRAWINGS

These and other advantages and features of the present invention will become more readily appreciated when considered in connection with the following detailed description and drawings, in which:

Figure 1 is a schematic perspective view illustrating the principles of friction stir welding;

Figure 2 is a schematic plan view illustrating principles of friction welding;

Figure 3 is an enlarged fragmentary perspective view of a tip end of a friction stir welding tool;

Figure 4 is a further enlarged perspective view of the tip end of a friction weld stir tool; and

Figures 5 through 9 are cross-sectional views illustrating different embodiments of friction stir weld tools constructed according to the present invention.

### DETAILED DESCRIPTION

In friction stir welding, a cylindrical, shouldered tool with a profiled probe is rotated and slowly plunged into the joint line between two pieces of sheet or plate material, which are abutted together. The parts are clamped in a manner that prevents the abutting joining faces from being forced apart as the tool is plunged into and moved along the joint. Frictional heat is generated between the wear resistant welding tool and the material of the work pieces. This heat causes the latter to soften without reaching the melting point and allows traversing of the tool along the joint line. The plasticized material is transferred from the leading edge of the tool to the trailing edge of the tool probe and is forged by the intimate contact of the tool shoulder in the pin profile. This leaves a solid phase bond between the two pieces as the tool passes by. This process can be regarded as a solid phase keyhole welding technique, since a hole to accommodate the probe or tip of the tool is generated, and then filled during the welding sequence.

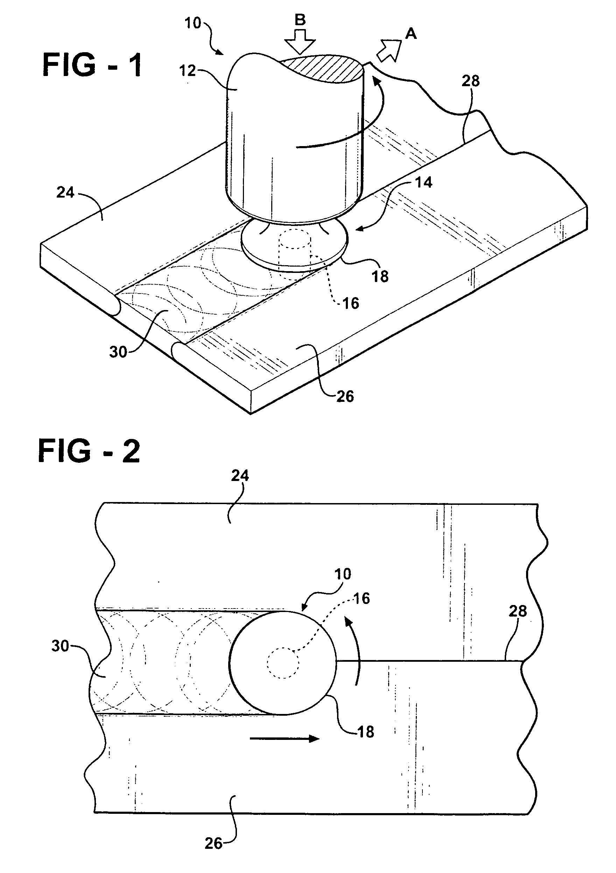

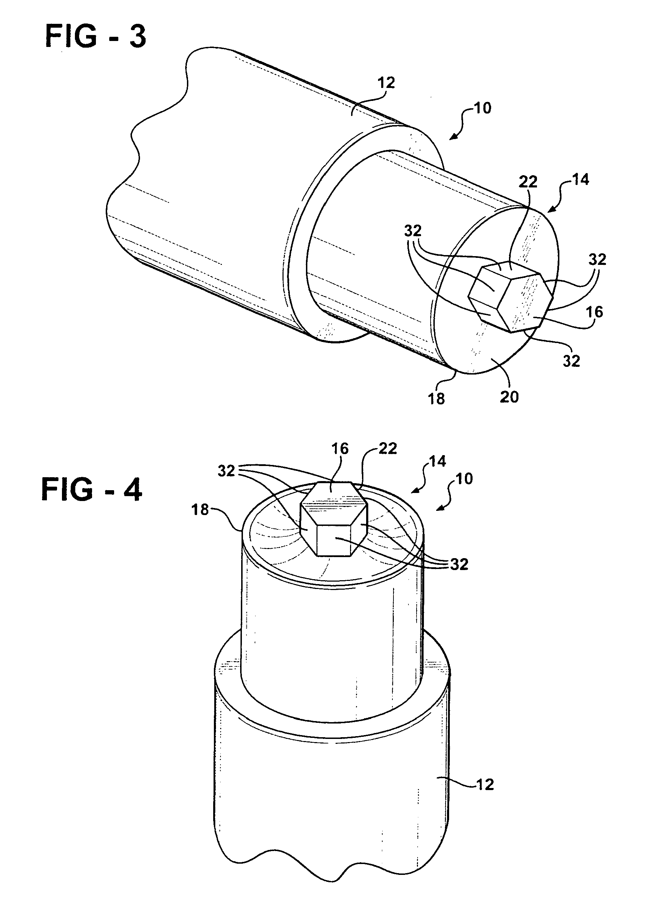

Figure 1 illustrates the general principle of friction stir welding employing the friction stir weld tool according to the invention. The friction stir weld tool is generally shown at 10 and may comprise a generally cylindrical shank 12 that enables the tool 10 to be chucked in a rotating tool holder (not shown). The tool 10 includes a working free end 14 which includes a plunger tip or probe 16 which projects centrally from the free end 14 of the tool 10. Spaced from the free end of the probe 16 is a shoulder 18. A face 20 (Figure 3) of the shoulder 18 and an outside diameter surface 22 of the probe 16 serve as the functional surfaces in contact with at least two work pieces 24, 26 to effect the formation of a friction stir weld.

As mentioned above, the probe 16 is plunged into an abutting joint 28 between the two work pieces 24, 26 while the tool 10 is being rotated. The tool 10 is then advanced along the joint 18 in the direction of arrow A as the tool continues to rotate. The face 20 of the shoulder 18 is pressed down in the direction of arrow B against the upper surfaces of the work pieces 24, 26 on either side of the joint 28 to further work and stir the plasticized metal at the surface to yield a metallurgical weld 30 across the joint 28.
Figures 1 and 2 illustrate the construction and operation of the tool in forming the joint 28.

The friction stir weld tool 10 can take on any of a number of shapes and features. Figures 3 and 4 illustrate one embodiment of the working free end of a tool 10. It can be seen that the probe 16 may be other than cylindrical and provided with flats 32. The present invention is not limited to any particular shape and/or size of the tip 16, nor are there limits to the number and shape of various surfaces on the tip 16. Figures 3 and 4 further illustrate the face 20 of the shoulder 18 as having a cupped or concave configuration. This may assist in the friction stir welding of the materials, but the invention is not to be limited to any particular shape of face 20 of the shoulder 18. The overall configuration of the friction weld stir tool 10 is not limited to the disclosed embodiment, which is meant to be exemplary, and contemplates any friction stir tool configuration suitable for friction stir welding that may be presently available or developed in the future.

Turning now to particular aspects of the present invention, at least the working free end 14 of the friction weld stir tool 10 is fabricated of powder metal which has been compacted and sintered to the desired shape. One advantage of powder metallurgy is that it enables the friction stir tool to be made near net shape to the desired final tool configuration without extensive post fabrication machining or secondary finishing operations of the tool. Another advantage is that it enables a wide selection of materials that might not otherwise be available for use in connection with wrought friction stir weld tools.

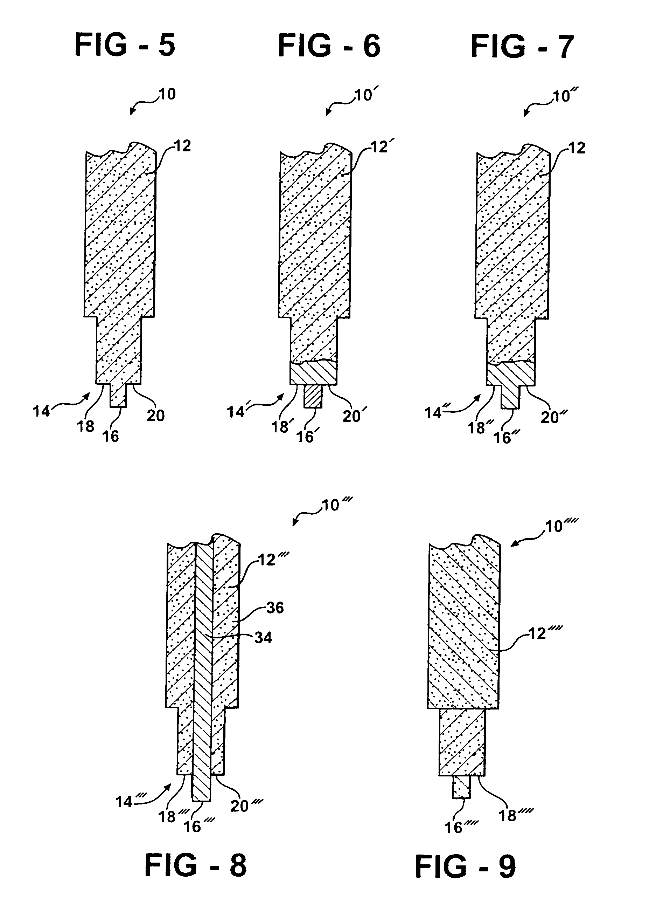

In one example of Figure 5, the entire friction weld stir tool 10 is fabricated of the same powder metal material. For example, the tool may be fabricated of an iron based pre-alloyed powder metal material, such as M2 or H13 tool steels. These materials are compacted and then sintered to near net shape and may be used with little post-forming finishing of the tools.

Powder metal material is advantageous in connection with friction stir weld tools in that the inherent porous structure of the material increases the friction coefficient as compared to a wrought material. The use of powder metal also reduces the thermal conductivity as compared to wrought tools. This acts to maintain more heat at the tool/workpiece interface since the powder metal tool has less of a heat sink effect than that of a wrought tool counterpart. The base material may further be treated or altered to vary the properties, including altering the coefficient of friction and/or the wear resistance. To produce a tool in accordance with the present invention the free end 14 of the tool 10 may be steam treated under high temperature and pressure to effectively oxidize and convert the exposed surface of the tool 10 to Fe₃O₄, which is a highly stable form of iron oxide, that has the effect of increasing the wear resistance and friction coefficient of the base iron-based powder metal material.

The invention further contemplates admixing friction-altering powder additives with the powder metal mix to improve the tool working properties. The additives may increase or decrease the kinetic coefficient of friction of the friction stir welding tool 10 to respectively increase or decrease the heat generated during use of the friction stir welding tool 10. Accordingly, the tool 10 can be selectively manufactured to generate the desired amount of heat in use, thereby reducing workpiece-to-tool adhesion, while providing the desired weld properties, depending on the material properties of the work pieces 24, 26 be joined. The additives can be added to the powder metal mix prior to compaction, and then pressed and sintered in-situ. For example, additives CaF2, MnS, MoS2, BN, CaCO3, silica, alumina, ceramic, carbide compounds, and other hard, stable particles, such as ferro-molybdenum, ferro-nickel, chromium and/or tribaloy, may be added to improve the working performance of the base powder metal material. The invention is not limited to any particular composition of material other than as specified in claim 1.

The admixing can be through the use of resin impregnation or other impregnation material to fill the porosity of at least certain portions of the tool 10 to enhance the working performance of the tool 10. The impregnation can include various materials which, as mentioned, will alter the kinetic coefficient of friction of the tool 10, the thermal conductivity, and working performance of the tool 10. This includes the infiltration of a material having a lower melting point than the base powder metal mix to fill the porosity of the powder metal materials.

The use of powder metallurgy also enables the maker of the tool 10 to alter the properties, as desired, in different regions of the tool 10. This can be done via the sintering process alone and/or through the use of mixtures of various powders, alloys, and additives to provide a hybrid of microstructures including a variety of microstructural phase gradients throughout the tool 10. For example, a combination of hard phase, soft phase and carbide precipitates in the microstructure may provide strength, ductility and wear resistance properties not available in a single phase structure. The various phases and features may include ferrite, pearlite, bainite, martensite, metal carbides, hypereutectoid and hypoeutectoid phases and various precipitates, for example.

In addition, sintering aid additives, which are added to the powder metal mix prior to compaction, can be used to facilitate manufacture of the tool 10. The sintering aid additives can improve the strength and other properties of the tool 10, such as wear resistance or thermal properties, for example, through liquid phase, transient liquid phase or enhanced solid solution mechanisms. Some examples of sintering aid materials include, by way of example and without limitation, MoS2, phosphorous and phosphorous compounds, boron, cobalt, tin, and other materials that improve the degree of sinter and/or density of the compacted tool region.

As mentioned, different process treatments can be used on selected regions of the tool, thereby altering the composition of the material in different regions. Accordingly, as shown in Figure 6, for example, the probe or tip 16' is made of one material which may have properties of extremely good wear resistance and high hardness in order to best function and withstand the pressures and temperatures associated with the plunging action of the probe 16' as it passes into the material and is then forced through the material under pressure and elevated temperature, whereas the shoulder region 18' may be fabricated of a different material exhibiting good wear resistance but also exhibiting a high friction coefficient to maximize the stirring capabilities of the shoulder during friction stir welding, while still further the shank 12' may be made of yet a different material if desired which may constitute a lower alloy, less expensive material.

Figure 7 is a variation on Figure 6 in which the probe 16" and shoulder 18" regions of the tool 10" are fabricated of one powder metal material, whereas the shank 12" is fabricated of a different powder metal composition. Of course, the invention contemplates that the working free end 14" of the tool 10" could be fabricated of powder metal to achieve the advantages described herein which may be cemented or otherwise joined to a tool shank which may not necessarily be made of powder metal in order to reduce costs or offer an alternative to an all-powder metal friction weld stir tool if desired. This too is contemplated by the present invention.

Figure 8 illustrates another gradient powder metal structure of the friction stir weld tool 10"', in which a core 34 of the tool 10"' may be fabricated of one material, such as a high load, high wear resistance material, while an outer layer or sheath or shell 36, including the shoulder region 18"' is fabricated of a different material which may be a wear resistant, but higher coefficient of friction material than that used for the core 34.

Finally, Figure 9 illustrates another friction stir welding tool 10"", in which various portions of the tool "" are constructed separately from one another, and thereafter sinter bonded to one another. As such, the probe 16"" can be compacted from one powder mixture, the shoulder 18"" from another powder mixture, and the shank 12"" from yet another powder mixture. Thereafter, the separate portions 16"", 18"", and 12"" and be sintered together. Sintering additives or other additives can also be incorporated in one or more of the powder mixtures of the respective portions, as desired. It should be recognized that the number of portions constructed separately from one another can be varied, as necessary, to obtain the tool structure desired.

Another aspect of the invention includes a method of manufacturing a tool 10, 10', 10", 10"', 10"" in accordance with the embodiments above. The method includes forming the various portions of the respective tool, including compacting, where the portion is constructed from powder, and joining the portions to one another, wherein at least a portion of the tool is sintered. Where adjacent ones of the respective portions 12, 16, and 18, including their various embodiments, are compacted from powder, the method further includes joining the separate portions to one another by a diffusion process within a sintering furnace. Sintering enhancement additives or other techniques can be used in the sintering process. It should be recognized that various combinations of the aforementioned tool portions, tip, shoulder, shank and shaft, may constructed as one piece or separately from one another, and joined together via the sintering process. One aspect of the manufacturing process contemplates that the sintering can be conducted in a continuous-style furnace at temperatures above 900 degrees C, and near ambient pressure, and not under a vacuum or in a closed chamber pressure vessel.

The foregoing invention has been described in accordance with the relevant legal standards, thus the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. A friction stir welding tool (10) having a welding tip (14) fabricated of powder metal material **characterised in that** the powder metal material is ferrous-based and at least a portion of the working surface of the welding tip contains Fe₃O₄ iron oxides..

2. A friction stir welding tool (10) according to claim 1 wherein the ferrous-based powder metal material is admixed with at least one of alumina, carbide, ferro-molybdenum, ferro-nickel, chrome or tribaloy.

3. A friction stir welding tool (10) according to claim 1 wherein the powder metal material is cermet.

4. A friction stir welding tool (10) according to claims 1, 2 or 3 wherein the welding tip (14) includes a plunger portion (16) and a shoulder portion (18).

5. A friction stir welding tool (10) according to claim 4 wherein the powder material has gradient properties in which the plunger portion (16) has different properties compared to the shoulder portion (18).

6. A friction stir welding tool (10) according to claim 4 wherein the plunger portion (16) has higher wear resistance characteristics than the shoulder portion (18).

7. A friction stir welding tool (10) according to claim 4 wherein the plunger portion (16) and the shoulder portion (18) of the tool are fabricated of different materials.

8. A friction stir welding tool (10) according to claim 4 wherein the plunger portion (16) and the shoulder portion (18) are constructed separately from one another and joined to one another.

9. A friction stir welding tool (10) according to claim 1 wherein a central core (34) of the tool is fabricated of a different material than an outer sheath (36) of the tool.

10. A friction stir welding tool (10) according to claim 7 and claim 9 wherein the plunger portion (16) of the tool is made of the core material (34) and the shoulder portion (18) is made of the sheath material (36).

11. A friction stir welding tool (10) according to any preceding claim wherein the powder metal material is infiltrated with a material having a lower melting temperature prior to compacting.

12. A friction stir welding tool (10) according to any preceding claim wherein the powder metal material is impregnated with resin.

13. A method of manufacturing a friction stir welding tool including compacting a ferrous-based powder mixture, sintering the powder mixture at about ambient pressure which is not under vacuum, and steam treating at least a portion of the working surface of the tool to induce formation of Fe₃O₄ iron oxides.

14. A method of manufacturing a friction weld tool including compacting at least two separate portions of the tool separately from one another and joining them to one another, and steam treating at least a portion of the welding tip of the tool to induce formation of Fe₃O₄ iron oxides.

15. A method according to claim 14 wherein the separately compacted portions of the tool are joined to one another by sintering.

## Patentansprüche

1. Rührreibschweiß-Werkzeug (10), das eine Schweißspitze (14) aufweist, die aus einem Metallpulvermaterial hergestellt ist, **dadurch gekennzeichnet, dass** das Metallpulvermaterial auf Eisen basiert und mindestens ein Teil der Arbeitsfläche der Schweißspitze Fe₃O₄ Eisenoxide enthält.

2. Rührreibschweiß-Werkzeug (10) nach Anspruch 1, wobei das auf Eisen basierende Metallpulvermaterial mit mindestens einem von Aluminiumoxid, Karbid, Eisen-Molybdän, Eisen-Nickel, Chrom oder Tribaloy gemischt ist.

3. Rührreibschweiß-Werkzeug (10) nach Anspruch 1, wobei das Metallpulvermaterial Cermet ist.

4. Rührreibschweiß-Werkzeug (10) nach Anspruch 1, 2 oder 3, wobei die Schweißspitze (14) einen Kolbenteil (16) und einen Schulterteil (18) einschließt.

5. Rührreibschweiß-Werkzeug (10) nach Anspruch 4, wobei das Pulvermaterial Gradienteneigenschaften aufweist, wobei der Kolbenteil (16) verglichen mit dem Schulterteil (18) andere Eigenschaften aufweist.

6. Rührreibschweiß-Werkzeug (10) nach Anspruch 4, wobei der Kolbenteil (16) höhere Verschleißbeständigkeitseigenschaften als der Schulterteil (18) aufweist.

7. Rührreibschweiß-Werkzeug (10) nach Anspruch 4, wobei der Kolbenteil (16) und der Schulterteil (18) aus verschiedenen Materialien hergestellt sind.

8. Rührreibschweiß-Werkzeug (10) nach Anspruch 4, wobei der Kolbenteil (16) und der Schulterteil (18) separat voneinander erstellt und miteinander verbunden sind.

9. Rührreibschweiß-Werkzeug (10) nach Anspruch 1, wobei ein mittlerer Kern (34) des Werkzeugs aus einem anderen Material als ein äußerer Mantel (36) des Werkzeugs hergestellt ist.

10. Rührreibschweiß-Werkzeug (10) nach Anspruch 7 und Anspruch 9, wobei der Kolbenteil (16) des Werkzeugs aus dem Kernmaterial (34) hergestellt ist und der Schulterteil (18) aus dem Mantelmaterial (36) hergestellt ist.

11. Rührreibschweiß-Werkzeug (10) nach einem der vorhergehenden Ansprüche, wobei vor dem Verdichten ein Material in das Metallpulvermaterial eingeschleust wird, das einen niedrigeren Schmelzpunkt aufweist.

12. Rührreibschweiß-Werkzeug (10) nach einem der vorhergehenden Ansprüche, wobei das Metallpulvermaterial mit Harz imprägniert ist.

13. Verfahren zum Herstellen eines Rührreibschweiß-Werkzeugs, einschließend Verdichten einer auf Eisen basierenden Pulvermischung, Sintern der Pulvermischung bei etwa Umgebungsdruck, nicht jedoch unter Vakuum, und Behandeln von mindestens einem Teil der Arbeitsfläche des Werkzeugs mit Dampf, um die Bildung von Fe₃O₄ Eisenoxiden zu induzieren.

14. Verfahren zum Herstellen eines Rührreibschweiß-Werkzeugs, einschließend Verdichten von mindestens zwei Teilen des Werkzeugs separat voneinander und Verbinden der Teile miteinander, und Behandeln von mindestens einem Teil der Arbeitsfläche des Werkzeugs mit Dampf, um die Bildung von Fe₃O₄ Eisenoxiden zu induzieren.

15. Verfahren nach Anspruch 14, wobei die separat verdichteten Teile des Werkzeugs durch Sintern miteinander verbunden werden.

## Revendications

1. Outil de soudage par agitation et friction (10) ayant une pointe de soudage (14) fabriquée à partir d'un matériau de métal en poudre, **caractérisé en ce que** le matériau de métal en poudre est à base de fer et au moins une partie de la surface de travail de la pointe de soudage contient des oxydes de fer Fe₃O₄.

2. Outil de soudage par friction et agitation (10) selon la revendication 1, dans lequel le matériau de métal en poudre à base de fer est mélangé avec au moins l'un parmi l'alumine, le carbure, le ferromolybdène, le ferronickel, le chrome ou le tribaloy.

3. Outil de soudage par friction et agitation (10) selon la revendication 1, dans lequel le matériau de métal en poudre est du cermet.

4. Outil de soudage par friction et agitation (10) selon la revendication 1, 2 ou 3, dans lequel la pointe de soudage (14) comprend une partie de piston plongeur (16) et une partie d'épaulement (18).

5. Outil de soudage par friction et agitation (10) selon la revendication 4, dans lequel le matériau en poudre a des propriétés de gradient dans lequel la partie de piston plongeur (16) a des propriétés différentes par rapport à la partie d'épaulement (18).

6. Outil de soudage par friction et agitation (10) selon la revendication 4, dans lequel la partie de piston plongeur (16) a des caractéristiques de résistance à l'usure supérieures à la partie d'épaulement (18).

7. Outil de soudage par friction et agitation (10) selon la revendication 4, dans lequel la partie de piston plongeur (16) et la partie d'épaulement (18) de l'outil sont fabriquées à partir de différents matériaux.

8. Outil de soudage par friction et agitation (10) selon la revendication 4, dans lequel la partie de piston plongeur (16) et la partie de soudage (18) sont construites séparément l'une de l'autre et assemblées l'une à l'autre.

9. Outil de soudage par friction et agitation (10) selon la revendication 1, dans lequel un noyau central (34) de l'outil est fabriqué avec un matériau différent d'une gaine externe (36) de l'outil.

10. Outil de soudage par friction et agitation (10) selon la revendication 7 et la revendication 9, dans lequel la partie de piston plongeur (16) de l'outil est réalisée à partir du matériau de noyau (34) et la partie d'épaulement (18) est réalisée à partir d'un matériau de gaine (36).

11. Outil de soudage par friction et agitation (10) selon l'une quelconque des revendications précédentes, dans lequel le matériau de métal en poudre est infiltré avec un matériau ayant une température de fusion inférieure avant le compactage.

12. Outil de soudage par friction et agitation (10) selon l'une quelconque des revendications précédentes, dans lequel le matériau de métal en poudre est imprégné avec de la résine.

13. Procédé pour fabriquer un outil de soudage par friction et agitation comprenant les étapes consistant à compacter un mélange de poudre à base de fer, fritter le mélange de poudre approximativement à la pression ambiante qui n'est pas sous vide, et traiter à la vapeur au moins une partie de la surface de travail de l'outil pour induire la formation d'oxydes de fer Fe₃O₄.

14. Procédé pour fabriquer un outil de soudage par friction comprenant les étapes consistant à compacter au moins deux parties séparées de l'outil séparément l'une de l'autre et à les assembler l'une à l'autre, et traiter à la vapeur au moins une partie de la pointe de soudage de l'outil pour induire la formation d'oxydes de fer Fe₃O₄.

15. Procédé selon la revendication 14, dans lequel les parties compactées séparément de l'outil sont assemblées l'une à l'autre par frittage.
